# EUROPÄISCHE PATENTSCHRIFT

(11) **EP 2 500 202 B1**
(45) Veröffentlichungstag und Bekanntmachung des Hinweises auf die Patenterteilung: **11.09.2013**
(21) Anmeldenummer: 12001533.4
(22) Anmeldetag: 07.03.2012
(51) Int. Cl.: B60K 15/04, B60K 15/077

(54) **Kraftstoffbehälter mit einer eine Gitterstruktur aufweisenden Lochwandung**
Fuel container with a hole wall comprising a grid structure
Réservoir de carburant avec une paroi perforée comportant une structure de grille

(30) Priorität: 12.03.2011 DE 202011003901 U; 26.03.2011 DE 202011004410 U; 16.05.2011 DE 102011101720
(43) Veröffentlichungstag der Anmeldung: 19.09.2012
(73) Patentinhaber: Stock, Manfred, 76547 Sinzheim (DE)
(72) Erfinder: Stock, Manfred, 76547 Sinzheim (DE)
(74) Vertreter: Thämer, Wolfgang

(56) Entgegenhaltungen:
- DE-A1-102008 044 780
- US-A- 1 999 336
- US-A- 2 043 223
- US-A- 2 104 132

## Beschreibung

Die Erfindung betrifft einen Kraftstoffbehälter mit einer dem Kraftstoffzulauf räumlich nachgeordneten, eine Gitterstruktur aufweisenden, internen Lochwandung, wobei die Gitterstruktur einzelne Ausnehmungen hat, deren minimale Breite oder Durchmesser weniger als 6 mm misst.

Die gattungsbildende US 2 104 132 A offenbart einen Kraftstoffbehälter mit einer derartigen Gitterestruktur. Zumindest ein Teil der einzelnen Ausnehmungen der Gitterstruktur sind längliche, durch Stanzen und Umformen entstandene Schlitze, deren Stanzabfall als Stege bei der Bearbeitung entlang einer Schlitzlängskante nach unten gebogen werden. Die die Formsteifigkeit der Gitterstruktur erhöhende Stege haben eine Höhe, die jedoch nich groß genug ist, als Schlingerwände dienen zu können.

Aus der DE 870 072 B ist ein Sicherungskörper bekannt, der den Diebstahl von Kraftstoff aus Kraftstoffbehältern verhindern soll. Der Sicherungskörper ist ein rohrförmiger Tankstutzeneinsatz, der in seinem unteren Bereich einen kegelförmigen gelochten Träger mit aufgelegtem Sieb aufweist. Die Spitze des kegelförmigen Siebträgers weist in Richtung des Tankstutzenverschlusses. Ein derartiger Tankstutzeneinsatz ist mit Gewalt in kürzester Zeit aus dem Tankstutzen entfernbar.

Ferner ist aus der DE 20 2005 015 280 U1 ein LKW-Tank mit einem Einfüllstutzen bekannt, der im Inneren des Tanks zur Tankoberseite umgelenkt wird, um dort vor einem Hindernis, z.B. einem Beruhigungslochblech, zu enden. Das Hindernis hat von der Einfüllstutzenmündung nur einen geringen Abstand. Die Form des Einfüllstutzens soll in Kombination mit dem Hindernis das Einführen eines Absaugschlauches verhindern.

Der vorliegenden Erfindung liegt die Problemstellung zugrunde, einen Kraftstoffbehälter so weiterzuentwickeln, dass das Entwenden einer größeren Kraftstoffmenge erschwert wird, sofern der entwendungsbedingte Behälterzugang oberhalb des Flüssigkeitsspiegels eines zu mindestens 80 % gefüllten Kraftstoffbehälters liegt.

Diese Problemstellung wird mit den Merkmalen des Hauptanspruches gelöst. Dazu definiert die Lochwandung in Verbindung mit der Kraftstoffbehälterwandung einen Zugangsraum, der mindestens 5% des Kraftstoffbehälterinnenraumes umschließt. Der von der Kraftstoffbehälterwandung und der Lochwandung umbaute Zugangsraum ist im oberen Bereich des Kraftstoffbehälters angeordnet und schließt direkt an den Innenraum des Kraftstoffzulaufs an. Die Gitterstruktur ist im Kraftstoffbehälterinnenraum des Kraftstoffbehälters form-, kraft- und/oder stoffschlüssig angeordnet. Der Gesamtquerschnitt der Ausnehmungen der Gitterstruktur ist größer als der doppelte Querschnitt des Kraftstoffzulaufes.

Der jeweilige Kraftstofftank ist ein Behälter zur temporären Aufnahme von flüssigen, nicht unter Druck stehenden Gemischen aus Kohlenwasserstoffen zum Antrieb von Verbrennungskraftmaschinen von Land-, Luft- und Seefahrzeugen und stationären Maschinen. Der einzelne Kraftstoff ist beispielsweise Benzin, synthetisches Benzin, Kerosin, Benzol, Dieselkraftstoff, Biodiesel, Pflanzenöl, Zweitaktgemisch und vieles mehr. Die mit den Lochwandungen ausgerüsteten Kraftstofftanks werden zunächst vornehmlich in großen Lastkraftwagen und größeren Baumaschinen eingesetzt.

Der einzelne Kraftstofftank ist u.a. aus Eisenmetall, Buntmetall, Kunststoff oder einem Verbundwerkstoff hergestellt. Sein Innenraum wird z.B. durch eine Art von Zwischenboden in einen Zugangsraum und einen Sperrraum aufgeteilt. In den Zugangsraum mündet der Tankstutzen, wobei der Tankstutzeninnenraum nicht zum Zugangsraum gehört. Der Zwischenboden, der im oberen Bereich des Kraftstoffbehälters angeordnet wird, ist eine stabil ausgeführte Lochwandung, die z.B. bezüglich ihrer vielen Ausnehmungen und deren Anordnung die Form eines grobmaschigen Siebes, eines Gitters oder einer Lochplatte hat. Die globale Form der Lochwandung erstreckt sich von einer ebenen Platte bis zur beliebig gekrümmten Raumfläche.

Die Lochwandung wird beim Herstellen des Kraftstoffbehälters form-, kraft- und/oder stoffschlüssig, also unlösbar, eingebaut. Die Befestigungstechniken können u.a. Schweißen, Löten, Kleben, Verschrauben, Vernieten oder Einklemmen sein.

Durch die im Kraftstoffbehälter eingezogene Lochwandung kann bei einem vollen Kraftstofftank der größte Teil des Tankinhalts durch den Tankstutzen mit Hilfe eines Absaugschlauchs nicht mehr innerhalb einer akzeptablen Zeitspanne entnommen werden, da der Absaugschlauch, dessen Außendurchmesser größer als sechs Millimeter ist, nur in den relativ kleinen Zugangsraum eingeführt werden kann. Nur die dort erreichbare, relativ kleine Kraftstoffmenge kann durch Abpumpen abgesaugt werden. Auch ein Absaugen durch ein oberhalb der Lochwandung in den Tank widerrechtlich eingedrücktes oder eingeschlagenes Loch vergrößert die mögliche Absaugmenge nicht.

Weitere Einzelheiten der Erfindung ergeben sich aus den Unteransprüchen und der nachfolgenden Beschreibung schematisch dargestellter Ausführungsformen.
- Figur 1:: Längsschnitt durch einen nicht erfindungsgemäßen Kraftstoffbehälter;
- Figur 2:: Querschnitt durch einen nicht erfindungsgemäßen Kraftstoffbehälter mit rechteckigem Querschnitt;
- Figur 3:: Querschnitt durch einen nicht erfindungsgemäßen Kraftstoffbehälter mit rundem Querschnitt;
- Figur 4:: wie Figur 2, jedoch mit schräg angeordneter Lochwandung;
- Figur 5:: Querschnitt durch einen nicht erfindungsgemäßen Kraftstoffbehälter mit sechseckigen Querschnitt, wobei im Tankstutzen der Tankstutzenquerschnitt dargestellt ist;
- Figur 6:: Gitterstruktur der Lochwandung mit runden Ausnehmungen;
- Figur 7:: wie Figur 6, jedoch mit rechteckigen Ausnehmungen;
- Figur 8:: wie Figur 6, jedoch mit dreieckigen Ausnehmungen;
- Figur 9:: wie Figur 6, jedoch mit winkelförmigen Ausnehmungen;
- Figur 10:: stoffschlüssiger Anschluss der Lochwandung an der Tankwandung;
- Figur 11:: wie Figur 10, jedoch mit Anschlag;
- Figur 12:: formschlüssiger Anschluss der Lochwandung an der Tankwandung;
- Figur 13:: wie Figur 2, jedoch mit nach unten von der Lochwandung abstehenden Stützstegen;
- Figur 14:: wie Figur 13, ein erfindungsgemäßer Kraftstoffbehälter mit zusätzlich nach oben abstehenden Schlingerwänden;
- Figur 15:: wie Figur 2, jedoch mit einer profilierten Lochwandung;
- Figur 16:: wie Figur 15, jedoch mit einer wellenförmig profilierten Lochwandung;
- Figur 17:: wie Figur 1, jedoch mit schräg angeordneter Lochwandung, die sich nur über einen Teil der Tanklänge erstreckt.

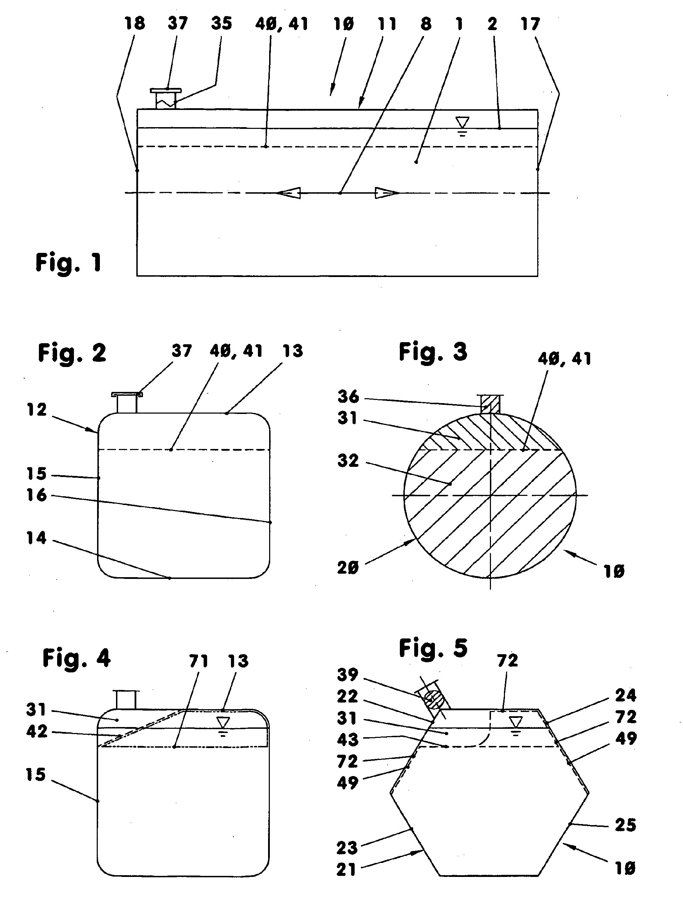

Die Figuren 1 und 2 zeigen einen zumindest annähernd quader förmigen Kraftstoffbehälter (10), wie er in der Regel in Lastkraftwagen, Bussen und größeren Baumaschinen verwendet wird. Der Behälter (10) hat z.B. eine vierkantrohrförmige Außenwandung (12), die stirnseitig mit einer vorderen (17) und einer hinteren Stirnwand (18) verschlossen ist. Die Außenwandung (12) besteht aus einer Oberseite (13), einer Außenseite (15), einer Unterseite (14) und einer Innenseite (16). Die Innenseite (16) ist dabei der plane Außenwandbereich, der zum Fahrzeugrahmen hin orientiert ist. Die Längskanten der Seiten (13 - 16) sind in der Regel abgerundet.

Selbstverständlich kann ein derartiger Behälter (10) u.a. auch aus sechs Platten, aus zwei Halbschalen oder aus anderen Teilstücken kraftstoffdicht zusammengefügt sein.

Übliche Kraftstofftanks (10) dieser Form haben z.B. einen Innenraum (30) mit einem Fassungsvermögen von 400 bis 650 Liter. Große Tanks - ohne Zusatzaussparungen - haben z.B. bei einer Länge von ca. 1400 mm eine Breite und eine Höhe von 700 mm. Stahltanks haben eine Wandstärke von z.B. 1,6 mm, während Aluminiumtanks eine Wandstärke von z.B. 3 mm aufweisen.

Neben den quaderförmigen Kraftstofftanks (10) findet man auch Tanks mit zylindrischer Wandung (20), vgl. Figur 3, und Tanks mit sechskant- bzw. prismenförmiger Wandung (21), vgl. Figur 5.

Jeder Kraftstofftank (10) hat in der Regel einen Kraftstoffzulauf in Form eines rohrförmigen Tankstutzens (35). Letzterer wird mit einem meist abschließbaren Tankstutzendeckel (37) verschlossen. Bei einem Innendurchmesser von z.B. 80 mm und einer Tankstutzenlänge von 150 mm ergibt sich ein Tankstutzeninnenraum (36) von ca. 0,75 Liter.

Nach den Figuren 1 bis 3 werden im Kraftstofftank (10) plane Lochwandungen (41) fest eingebaut. Beispielsweise bei einem waagerecht abgestellten Lastkraftwagen mit waagerecht eingebautem, mindestens zum Teil befüllten Kraftstofftank (10) ist die Lochwandung (41) parallel zum Kraftstoffflüssigkeitsspiegel (2) angeordnet, vgl. Figur 1. Bei diesem Kraftstofftank (10) beträgt der Abstand zwischen der Oberseite (13) und der Lochwandung (41) 10 bis 15 cm.

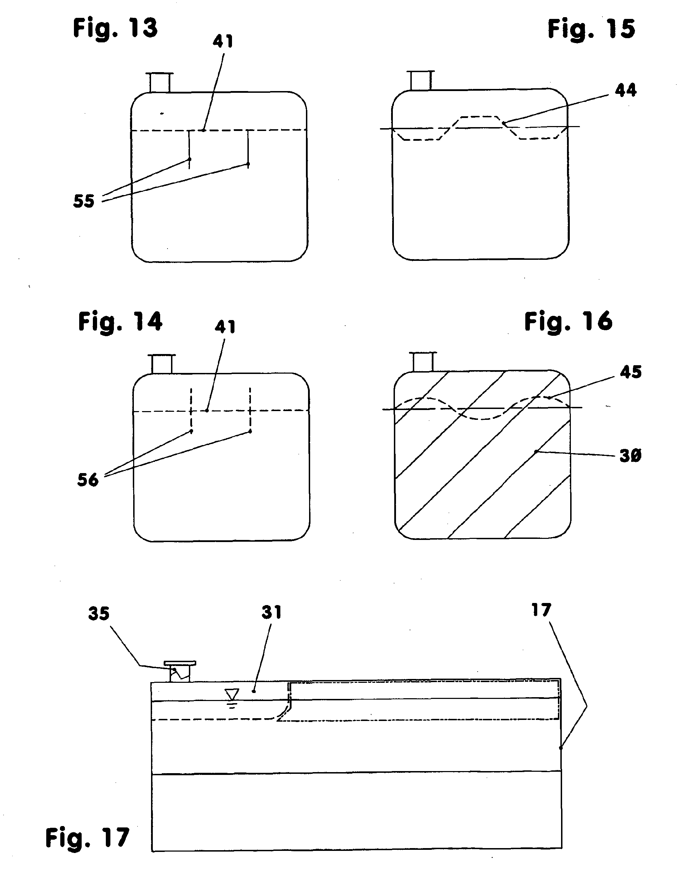

Die Lochwandung (41), die sich nach den Figuren 1 und 2 über die gesamten Länge und Breite des Kraftstofftanks (10) erstreckt, teilt somit den Kraftstoffbehälterinnenraum (30), vgl. Figur 16, in einen Zugangsraum (31) und einen Sperrraum (32) auf, vgl. Figur 3, wobei der unterhalb der Lochwandung (41) gelegene Sperrraum (32) vom Tankstutzeninnenraum (36) durch den dazwischenliegenden Zugangsraum (31) getrennt ist.

Bei einem Abstand von 15 cm befinden sich unterhalb der Lochwandung (41) bei dem oben genannten 650-Liter-Tank ca. 78,6 % des Kraftstoffs (1).

Würde der Abstand 10 cm betragen, befänden sich 85,7% des Kraftstoffs (1) unterhalb der Lochwandung (41) im Sperrraum (32). Bei einer irregulären Kraftstoffentnahme mit Hilfe eines über den Tankstutzen (35) eingeführten Absaugschlauches könnte somit maximal 14,3% des Gesamttankvolumens abgepumpt werden.

Die Lochwandung (41) ist im Ausführungsbeispiel nach den Figuren 1 bis 3 ein z.B. 2 bis 3 mm starkes Lochblech aus einem Eisenmetall oder ein 4 bis 6 mm starkes Lochblech aus einer

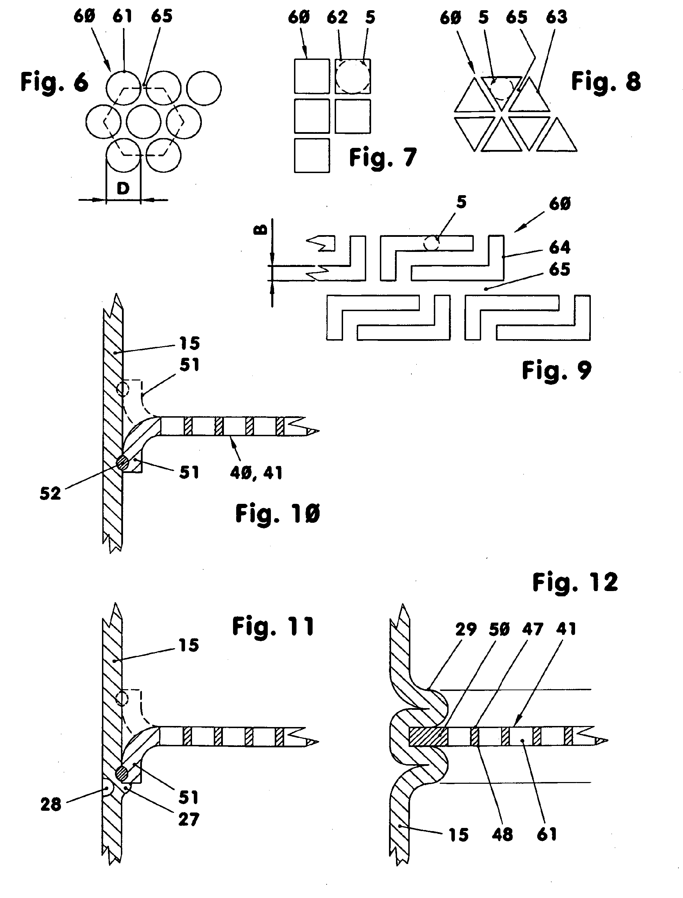

Aluminiumlegierung. Die Gitterstruktur (60) der Lochwandung (40, 41) wird beispielsweise durch ein Laser- oder Wasserstrahlschneiden erzeugt. Hierbei werden u.a. kreisförmige Bohrungen (61), vgl. Figur 6, rechteckige oder quadratische Löcher (62), vgl. Figur 7, dreieckige Ausnehmungen (63), vgl. Figur 8, oder winkelförmige Ausnehmungen (64), vgl. Figur 9, in die Lochwandung (40) eingebracht. Die Ausnehmungen (61 - 64) können nahezu jede herstellbare Querschnittsform haben. Möglich sind z.B. auch polygonale Formen, Sternformen, Trapezformen und unregelmäßige Querschnitte, sofern in die einzelnen Querschnitte kein Schlauch eingeführt werden kann, dessen Gesamtquerschnitt (5) einen Durchmesser hat, der größer als 6 mm ist. Demnach dürfen der Durchmesser (D) der Bohrungen (61) und die Breite (B) der der L-förmigen Ausnehmungen (64) nicht mehr als 6 mm messen.

Die zwischen den einzelnen Ausnehmungen (61 - 64) einer Gitterstruktur (60) gelegenen Stege (65) haben eine minimale Breite, die größer oder gleich als der Durchmesser (D) oder die Breite (B) ist.

Ggf. wird der Randbereich (50) der jeweiligen Lochwandung (40), der zur Befestigung der Lochwandung (40) am Kraftstofftank (10) dient, hierbei ausgespart, vgl. Figuren 10 bis 12.

Die Lochwandung (40) kann auch ein Gitterrost sein, bei dem der minimale Abstand zwischen zwei benachbarten Ausnehmungen (61 - 64) kleiner ist als ein Fünftel der Gitterrosthöhe.

Des Weiteren ist es möglich, die Lochwandung (41) zwar über die gesamte Länge und Breite des Kraftstoffbehälters (10) auszubilden, jedoch nur in einem Teilbereich mit einer Gitterstruktur (60) auszustatten. So könnte nur die Hälfte der Lochwandung (41), z.B. die, die vom Tankstutzen (35) weiter entfernt liegt, mit Ausnehmungen (61 - 64) versehen sein. Auch könnten innerhalb der Lochwandung (41) mehrere, voneinander räumlich abgegrenzte, gelochte Bereiche inselartig verteilt sein. Dies gilt auch für die Lochwandungen (44, 45).

Gemäß der Figur 4 ist die Lochwandung (40) eine schräg eingebaute plane Platte (42), die sich zumindest über einen Teilbereich der Tanklänge erstreckt, vgl. hierzu auch Figur 17. Die Platte (42) kontaktiert hier die Außenseite (15) im oberen Bereich und die Oberseite (13) in der vorderen Hälfte. Für den Fall, dass sie sich nicht über die gesamte Tanklänge ausdehnt, ist die Platte (42) - nach Figur 17 - rechts vom Tankstutzen (35) nach oben abgewinkelt, so dass der Zugangsraum (31) die Raumform eines Keils hat. Ein Keil hat hier - unter Vernachlässigung der abgerundeten Kanten - drei an ihren Längskanten aneinander anschließende rechteckige Flächen, die zwei dreieckige, parallele Stirnseiten gleicher Form und Fläche verbinden.

Um bei dieser Lösung ein beschädigendes Durchstechen der Tankoberseite (13) zu erschweren, ist die Tankwandung (11, 12) ggf. in dem Bereich gepanzert, der nicht zu der den Zugangsraum (31) umschließenden Wandung gehört. Unter einer Panzerung wird hier u.a. eine zweite, ggf. sogar verstärkte Blechlage oder eine partielle Materialstärkenverdickung der Tankwandung (11, 12) verstanden.

Die jeweilige Panzerung ist zumindest im vorderen und seitlichen leicht zugänglichen Bereich auch ein Stück weit nach unten entlang der Außen- (15) und der Stirnseite (17) gezogen. Sie panzert nach den Figuren 4 und 17 das obere Fünftel oder Viertel der Außen- und der Stirnseite (15, 17).

Eine andere Art der Panzerung ist in Figur 5 gezeigt. Dort ist die Lochwandung (43) außerhalb des Zugangsraums (31) entlang der beiden oberen Prismenwandungen (22, 24) entlanggeführt.

Die Figur 5 zeigt einen Zugangsraum (31), der im Querschnitt - unter Vernachlässigung der Abrundungen - die Form eines asymmetrischen Trapezes hat. Selbstverständlich kann der Zugangsraum (31) auch die Raumform eines Zylinders, einer Halbkugel oder einer anderen herstellbaren Form haben, deren minimaler Abstand zwischen der Lochwandung (43) und der Tankwandung (21) zudem mindestens 40 mm beträgt.

In den Figuren 10 bis 12 werden mehrere Möglichkeiten vorgestellt, wie die jeweilige Lochwandung (40, 41) in den Kraftstofftank (10) eingebaut und befestigt werden kann. Nach den Figuren 10 und 11 werden Lochwandungen (41) verwendet, deren Randbereich (50) z.B. keine Gitterstruktur (60) aufweist. Der Randbereich (50) der Lochwandung (41) ist beispielsweise abschnittsweise abwechselnd nach oben und nach unten abgewinkelt ausgeführt. Die Länge der Abwinkelung (51), die flächig z.B. an der Außenseite (15) anliegt, entspricht in der Regel der zwei- bis fünffachen Wandstärke der jeweiligen Lochwandung (41). Zwischen den einzelnen Abwinkelungen (51) ist hierzu die Lochwandung (41) ggf. mehrere Millimeter aufgetrennt.

Gemäß der Figuren 10 und 11 ist die Lochwandung (41) im Bereich der Abwinkelungen (51) über Punktschweißen stoffschlüssig z.B. mit der Tankwandung (15 - 18) verschweißt. Zur Erzeugung der Schweißpunkte (52) wird z.B. als Schweißverfahren das einseitige Punktschweißen nach DIN 1910 angewandt. Selbstverständlich kann eine Lochwandung (40, 41), wie sie in Figur 12 dargestellt ist, auch stumpf an den Wandungen (15 - 18) durch Punkt- oder Kehlnahtschweißen befestigt werden. Beim Kehlnahtschweißen muss zumindest eine der Stirnseite (17, 18) offen sein, mit der dann die Lochwandung (41) nicht verschweißt wird. In der Regel ist das die Stirnseite (18), die am weitesten vom Tankstutzen (35) entfernt liegt.

Nach Figur 11 wird die Lochwandung (41) durch eine besondere Ausgestaltung mindestens zweier Tankwandungen (15, 16) vor dem Schweißen an mindestens drei speziellen Anschlägen (27) präzise positioniert. Die Anschläge (27) sind in die Tankwandungen (15, 16) durch einen Drückvorgang, siehe Eindrückung (28), eingeprägt. Die Anschläge (27) befinden sich z.B. unterhalb der nach unten umgebogenen Abwinkelungen (51).

Die Außenseite (15) des Tanks nach Figur 12 ist durch eine Mehrfachfaltung (29) so profiliert, dass sie die Lochwandung (41) zumindest an ihrer Oberseite (47) und ihrer Unterseite (48) mit einem Spiel, kleiner 0,2 mm, umgibt. Die Abstützbreite entspricht in dieser Ausführung mindestens der Wandstärke der Lochwandung (41). Wird diese Mehrfachfaltung (29) an der Außenseite (15) und der Innenseite (16) des Tanks angebracht, kann die Lochwandung (41) vor dem Fertigstellen des Tanks (10) von einer noch offenen Tankstirnwand (17) oder (18) aus eingeschoben werden. Die Mehrfachfaltungen (29) der beiden Seiten (15, 16) umgreifen dann die Lochwandung (41) formschlüssig.

Anstelle der Mehrfachfaltung (29) kann ein weniger tief ausgeprägtes Profil zum Halten der Lochwandung (41) durch zwei übereinander liegende, zu Figur 11 beschriebene, Eindrückungen realisiert werden.

In Figur 5 ist eine Variante dargestellt, bei der eine Lochwandung (43), die sich über die gesamte Länge des Kraftstofftanks (10) erstreckt, form- und kraftschlüssig im Tank sitzt. Dazu ist die Lochwandung (43) zusätzlich mit nach unten weisenden Schenkeln (49) ausgestattet, die die oberen Prismenwandungen (22, 24) zum einen durch Anliegen panzern und zum anderen sich mit ihren Unterkanten auf den unteren Prismenwandungen (23, 25) abstützen. Bei der Fertigung der Lochwandung (43) wird diese so geformt, dass ihre nach unten weisenden Schenkel (49) einen Winkel einschließen, der größer ist als derjenige Winkel, der von den Prismenwandungen (22, 24) eingeschlossen wird.

In der Folge spannt sich die Lochwandung (43) zusammen mit den großflächigen Schenkeln (49) beim Einschieben in den an einer Stirnseite noch offenen Kraftstofftank (10) elastisch, nach außen federnd, kraftschlüssig gegen die oberen Prismenwandungen (22, 24).

Um zusätzlich zu den bisher gezeigten Befestigungsmöglichkeiten der Lochwandung (40) im jeweiligen Kraftstofftank (10) ein irreguläres Verlagern der Lochwandung (40), z.B. durch Einstoßen einer Brechstange in den Tank über den Tankstutzen (35), zu vermeiden, kann die Lochwandung (41) z.B. durch nach unten abstehende Stützstege (55), vgl. Figur 13, ausgesteift werden. Diese Stützstege (55) haben beispielsweise keine Gitterstruktur (60). Sie können parallel zur Längsrichtung (8) des Tanks (10), quer oder schräg dazu angeordnet werden.

Nach Figur 14 werden anstelle der Stützstege (55) mit einer Gitterstruktur (60) versehene Schlingerwände (56) benutzt. Die Schlingerwände (56) ragen hier beispielsweise auch nach oben über die Lochwandung (41) hinaus. Ihre Ausrichtung bezüglich der Tanklängsrichtung (8) ist wie bei Figur 13 nahezu beliebig.

Die Figuren 15 und 16 zeigen in Tanklängsrichtung (8) profilierte Lochwandungen (44, 45). Die Lochwandung (44) nach Figur 15 hat ein Profil, das - im Querschnitt betrachtet - aus z.B. drei nach oben oder unten offenen Trapezen zusammensetzt ist. Die Trapeze sind entlang einer fiktiven, strichpunktiert dargestellten Linie angeordnet. Die zwei äußeren Trapeze sind nach oben offen, während das mittlere Trapez noch unten offen ist. Auf diese Weise entsteht eine in Tanklängsrichtung (8) formsteife Lochwandung (44). Es können pro Tank (10) auch mehr als drei Trapeze aneinander gereiht werden. Die hier nicht parallelen Trapezseiten können Winkel zwischen 5 und 90 Winkelgraden einnehmen.

Die Lochwandung (45) nach Figur 16 weist ein Wellenprofil auf, das im Querschnitt betrachtet aus mindestens drei wechselweise nebeneinander - ebenfalls entlang einer fiktiven, strichpunktiert dargestellten Linie - angeordneten Kreisabschnitten besteht. Bei den beiden äußeren Kreisabschnitten liegen die Kreisbögen oberhalb der auf der strichpunktierten Linie gelegenen Sehnen der Kreisabschnitte. Die Bogenhöhe der Kreisabschnitte misst 1/4 bis 1/10 der Sehnenlänge.

Um beim Betanken des Kraftstoffbehälters (10) mit sehr großem Volumenstrom ein Rückprallen des Kraftstoffstrahls an der Lochwandung (40) zu verhindern oder mindestens zu verringern, sind auf der Oberseite (47) der Lochwandung (40) stegartige Leitbleche oder ein gitterartiger Leitblechverband angeordnet. Die einzelnen, mehrere Zentimeter hohen Leitbleche stehen dazu z.B. senkrecht von der Oberseite (47) ab. Sie bilden beispielsweise vom Tankstutzen (35) wegführende Kanäle aus, vgl. hierzu Figur 14. Nach dieser Figur formen die Schlingerwände (56) vergleichbare Kanäle.

### Bezugszeichenliste:

- 1: Kraftstoff
- 2: Flüssigkeitsspiegel
- 5: Saugschlauchaußendurchmesser
- 8: Tanklängsrichtung

- 10: Kraftstoffbehälter, Kraftstofftank, Tank
- 11: Behälterwandung, Kraftstoffbehälterwandung
- 12: Wandung, vierkantrohrförmig, Außenwandung
- 13: Oberseite
- 14: Unterseite
- 15: Außenseite
- 16: Innenseite, z.B. der Fahrzeugmitte zugewandt
- 17: Stirnwand, vorn, in Fahrtrichtung
- 18: Stirnwand, hinten

- 20: Wandung, rohrförmig
- 21: Wandung, sechskantrohrförmig
- 22: Prismenwandung, außen, oben
- 23: Prismenwandung, außen, unten
- 24: Prismenwandung, innen, oben
- 25: Prismenwandung, innen, unten
- 27: Auflageanschlag
- 28: Eindrückung
- 29: Mehrfachfaltung, Formschlussfaltung

- 30: Kraftstoffbehälterinnenraum: ((31)+(32))
- 31: Zugangsraum
- 32: Sperrraum

- 35: Kraftstoffzulauf, Tankstutzen
- 36: Tankstutzeninnenraum
- 37: Tankstutzendeckel
- 39: Querschnitt des Kraftstoffzulaufes

- 40: Lochwandung
- 41: Lochwandung als horizontale Platte
- 42: Lochwandung als schräge Platte
- 43: Lochwandung als Korb
- 44: Lochwandung als Profil, mehrfach abgewinkelt
- 45: Lochwandung als Profil, wellenförmig
- 47: Oberseite
- 48: Unterseite
- 49: Schenkel, nach unten weisend

- 50: Randbereich
- 51: Abwinkelung
- 52: Schweißpunkt
- 55: Stützstege
- 56: Schlingerwände

- 60: Gitterstruktur
- 61: Bohrungen, Ausnehmungen, rund
- 62: Löcher, Ausnehmungen, rechteckig
- 63: Ausnehmungen, dreieckig
- 64: Ausnehmungen, winkelförmig, L-förmig
- 65: Stege

- 71: Panzerung, Materialverdickung, Blechprofil
- 72: Panzerung, Lochwandung

- B: Breite der Ausnehmungen (62 - 64), maximal
- D: Durchmesser der Bohrungen (61)

## Patentansprüche

1. Kraftstoffbehälter (10) mit einer dem Kraftstoffzulauf (35) räumlich nachgeordneten, eine Gitterstruktur (60) aufweisenden, internen Lochwandung (40), wobei die Gitterstruktur (60) einzelne Ausnehmungen (61 - 64) hat, deren minimale Breite (B) oder Durchmesser (D) weniger als 6 mm misst, wobei
- die Lochwandung (40) in Verbindung mit der Kraftstoffbehälterwandung (11) einen Zugangsraum (31) definiert, der mindestens 5% des Kraftstoffbehälterinnenraums (30) umschließt,
- der von der Kraftstoffbehälterwandung (11) und der Lochwandung (40) umbaute Zugangsraum (31) im oberen Bereich des Kraftstoffbehälters (10) angeordnet ist und direkt an den Innenraum (36) des Kraftstoffzulaufs (35) anschließt,
- die Lochwandung (40) im Kraftstoffbehälterinnenraum (30) des Kraftstoffbehälters (10) form-, kraft- und/oder stoffschlüssig angeordnet ist, **dadurch gekennzeichnet,**
- **dass** der Gesamtquerschnitt der Ausnehmungen (61 - 64) größer ist als der doppelte Querschnitt (39) des Kraftstoffzulaufes (35), und
- **dass** die Lochwandung zur Erhöhung ihrer Formsteifigkeit mittels Schlingerwänden (56) ausgesteift ist.

2. Kraftstoffbehälter gemäß Anspruch 1, **dadurch gekennzeichnet, dass** die Lochwandung (40) eine ebene Platte (41) ist, deren Wandstärke gleich oder größer als die durchschnittliche Wandstärke des Kraftstoffbehälters (10) ist.

3. Kraftstoffbehälter gemäß Anspruch 1, **dadurch gekennzeichnet, dass** die Lochwandung (40) im Kraftstoffbehälter (10) zumindest bereichsweise form-, kraft- und/oder stoffschlüssig angeordnet ist.

4. Kraftstoffbehälter gemäß Anspruch 1, **dadurch gekennzeichnet, dass** der obere Bereich des Kraftstofftanks (10) derjenige Bereich ist, der oberhalb einer Tankhöhe liegt, die sich aus 75 % der mittleren Kraftstofftankhöhe berechnet.

## Claims

1. Fuel tank (10) comprising an internal perforated wall (40) disposed downstream of fuel inlet duct (35) and having a grid structure (60), said grid structure (60) comprising individual openings (61 - 64) having a minimum width (B) or diameter (D) of less than 6 mm, with
- said perforated wall (40) cooperating with fuel tank wall (11) to form an access space (31) defining at least 5 % of fuel tank interior (30);
- said access space (31) defined by fuel tank wall (11) and perforated wall (40) being disposed in the upper portion of fuel tank (10) and directly adjoining internal space (36) of fuel inlet duct (35); and
- perforated wall (40) being mounted inside fuel tank internal space (30) of fuel tank (10) in a positive, shape locked and/or material bonded manner;
**characterized in that**
- the total cross sectional area of openings (61 - 64) is larger than twice the cross sectional area of fuel inlet duct (35); and
- said perforated wall is stiffened by slosh-inhibiting baffles (56) to enhance its dimensional stiffness.

2. Fuel tank as claimed in claim 1, **characterized in that** perforated wall (40) is a planar plate member (41) having a wall thickness equal to or greater than the average wall thickness of fuel tank (10).

3. Fuel tank as claimed in claim 1, **characterized in that** perforated wall (40) is disposed in fuel tank (10) at least sectionally in a positive, shape locked and/ or a material bonded manner.

4. Fuel tank as claimed in claim 1, **characterized in that** the upper area of fuel tank (10) is the area disposed at a tank level computed to be higher than 75 % of the average fuel level.

## Revendications

1. Réservoir de carburant (10) comprenant une paroi interne perforée (40) qui est disposée dans l'espace derrière l'embout de remplissage (35) et qui comporte une structure de grille (60), la structure réticulaire (60) ayant des évidements individuels (61 - 64) dont la largeur minimale (B) ou le diamètre minimal (D) est de moins de 6 mm,
- la paroi perforée (40) en combinaison avec la paroi du réservoir (11) définissant un espace d'accès (31) qui entoure au moins 5% de l'espace intérieur du réservoir de carburant (30),
- l'espace d'accès (31) qui est entouré par la paroi du réservoir de carburant (11) et la paroi perforée (40) se trouvant dans la partie supérieure du réservoir de carburant (10) et rejoignant directement l'espace intérieur (36) de l'embout de remplissage (35),
- la paroi perforée (40) dans l'espace intérieur du réservoir de carburant (30) étant disposée par conjugaison de forme, par adhérence ou par liaison de matière,
**caractérisé en ce**
- **que** la section totale des évidements (61 - 64) est plus grande que le double de la section (39) de l'embout de remplissage (35) et
- **que** la paroi perforée (40) est renforcée par des plaques antiballottement (56) devant augmenter la rigidité de forme de la paroi.

2. Réservoir de carburant selon la revendication 1, **caractérisé en ce que** la paroi perforée (40) est une plaque plane (41) dont l'épaisseur de paroi est égale ou supérieure à l'épaisseur de paroi moyenne du réservoir de carburant (10).

3. Réservoir de carburant selon la revendication 1, **caractérisé en ce que** la paroi perforée (40) dans le réservoir de carburant (10) est disposée, au moins par endroits, par conjugaison de forme, par adhérence ou par liaison de matière.

4. Réservoir de carburant selon la revendication 1, **caractérisé en ce que** la partie supérieure du réservoir de carburant (10) est la partie qui se trouve au-dessus d'une hauteur de réservoir calculée sur la base de 75% de la hauteur moyenne du réservoir de carburant.
